# EUROPÄISCHE PATENTSCHRIFT

(11) **EP 3 623 576 B1**
(45) Veröffentlichungstag und Bekanntmachung des Hinweises auf die Patenterteilung: **11.08.2021**
(21) Anmeldenummer: 19194520.3
(22) Anmeldetag: 30.08.2019
(51) Int. Cl.: F01D 5/14, F01D 5/22

(54) **GASTURBINEN-LAUFSCHAUFEL**
GAS TURBINE ROTOR BLADE
AUBE DE TURBINE À GAZ

(30) Priorität: 17.09.2018 DE 102018215728
(43) Veröffentlichungstag der Anmeldung: 18.03.2020
(73) Patentinhaber: MTU Aero Engines AG, 80995 München (DE)
(72) Erfinder: Stiehler, Frank, 04924 Bad Liebenwerda (DE); Schellhorn, Lars, 07318 Saalfeld (DE)

(56) Entgegenhaltungen:
- EP-A2- 1 507 064
- EP-A2- 1 559 870
- WO-A1-2017/018981
- US-A1- 2017 183 971

## Beschreibung

Die vorliegende Erfindung betrifft eine Laufschaufel für eine Turbinen- oder Verdichterstufe einer Gasturbine, eine Turbinen- oder Verdichterstufe für eine Gasturbine bzw. Gasturbine, insbesondere Flugtriebwerk-Gasturbine, mit der Laufschaufel sowie ein Verfahren zum Herstellen der Laufschaufel.

Beispiele Für Gasturbinenschaufeln sind aus den Dokumenten EP1559870A2, EP1507064A2, WO2017018981A1 und US20170183971A1 bekannt.

Eine Aufgabe einer Ausführung der vorliegenden Erfindung ist es, eine Gasturbine zu verbessern.

Diese Aufgabe wird durch eine Laufschaufel mit den Merkmalen des Anspruchs 1 gelöst. Ansprüche 7 - 9 stellen eine Turbinen- oder Verdichterstufe für eine Gasturbine bzw. eine Gasturbine mit einer oder mehreren hier beschriebenen Laufschaufeln bzw. ein Verfahren zur Herstellung einer hier beschriebenen Laufschaufel unter Schutz. Vorteilhafte Ausführungsformen der Erfindung sind Gegenstand der Unteransprüche.

Nach der vorliegenden Erfindung weist bzw. weisen eine Laufschaufel für eine Turbinen- oder Verdichterstufe einer Gasturbine, insbesondere eine oder mehrere Laufschaufeln einer oder mehrerer Turbinen- und/oder einer oder mehrerer Verdichterstufen für eine bzw. einer Gasturbine, insbesondere Flugtriebwerk Gasturbine, (jeweils) ein Schaufelblatt und ein radial äußeres Deckband auf.

Das Schaufelblatt ist bzw. wird zur Strömungsumlenkung vorgesehen, insbesondere eingerichtet, bzw. verwendet und/oder weist, insbesondere hierzu, eine Vorder- und eine Hinterkante sowie eine Druck- und eine Saugseite auf, die Vorder- und Hinterkante verbinden. In einer Ausführung ist die Laufschaufel hohl, wodurch vorteilhaft Gewicht gespart werden kann.

Die Laufschaufel ist in einer Ausführung zerstörungsfrei lösbar, insbesondere form- und/oder reibschlüssig, an einem Rotor der (Turbinen- bzw. Verdichterstufe der) Gasturbine angeordnet bzw. hierzu vorgesehen, insbesondere eingerichtet, bzw. wird hierzu verwendet. In einer anderen Ausführung ist bzw. wird die Laufschaufel nicht zerstörungsfrei lösbar an einem Rotor der (Turbinen- bzw. Verdichterstufe der) Gasturbine angeordnet, insbesondere integral mit diesem ausgebildet oder stoffschlüssig mit diesem verbunden.

Eine Axialrichtung ist in einer Ausführung parallel, insbesondere koaxial, zu einer Dreh- bzw. (Haupt)Maschinenachse der (Turbinen- bzw. Verdichterstufe der) Gasturbine, eine Umfangsrichtung parallel zu einer Rotationsrichtung um diese Achse, eine Radialrichtung senkrecht auf Axial- und Umfangsrichtung.

Entsprechend ist das radial äußere Deckband in einer Ausführung ein Außendeckband und/oder integral mit dem Schaufelblatt ausgebildet oder stoffschlüssig mit diesem verbunden.

Nach einer Ausführung der vorliegenden Erfindung ist
für einen oder mehrere Konturpunkte einer Außenkontur eines Profilquerschnitts des Schaufelblatts an einer radial äußeren Gaskanalbegrenzung (des Deckbands bzw. durch das Deckband),
insbesondere für wenigstens 50%, in einer Ausführung wenigstens 75%, insbesondere wenigstens 90%, in einer Ausführung wenigstens 99%, (aller Konturpunkte) der Außenkontur dieses Profilquerschnitts (jeweils),
   eine, insbesondere radiale, Wandstärke des Deckbands an, insbesondere in, einem oder mehreren Randpunkten des Deckbands,
deren Verbindungsgerade(n) mit dem (jeweiligen) Konturpunkt mit einer bzw. der Normalen, die in diesem Konturpunkt auf der Außenkontur dieses Profilquerschnitts senkrecht steht und in einer Ausführung durch einen Randpunkt des Deckbands geht, (jeweils) einen Winkel einschließt bzw. einschließen, der höchstens 15° beträgt,
   insbesondere für wenigstens 50%, in einer Ausführung wenigstens 75%, insbesondere wenigstens 90%, in einer Ausführung wenigstens 99%, aller Randpunkte des Deckbands,
   deren Verbindungsgeraden mit dem (jeweiligen) Konturpunkt mit der Normalen, die in diesem Konturpunkt auf der Außenkontur dieses Profilquerschnitts senkrecht steht und in einer Ausführung durch einen Randpunkt des Deckbands geht, jeweils einen Winkel einschließen, der höchstens 15° beträgt, kleiner als eine Wandstärke des Deckbands an dem (jeweiligen) Konturpunkt ist, wobei in einer Ausführung dieser Randpunkt bzw. diese Randpunkte jeweils (gaskanalseitige Rand)Punkte (eines Randes) einer Gaskanalseite bzw. gaskanalseitigen bzw. -zugewandten Oberfläche des Deckbandes sind.

In einer Ausführung gilt somit für einen oder mehrere Konturpunkte P_{K, i} der Außenkontur des Profilquerschnitts des Schaufelblatts an der radial äußeren Gaskanalbegrenzung jeweils, dass die, insbesondere radiale, Wandstärke t(P_{R, ij}) des Deckbands an bzw. in einem oder mehreren Randpunkten P_{R, ij} der dem Gaskanal zugewandten bzw. radial inneren Oberfläche des Deckbands kleiner als die Wandstärke t(P_{K, i}) des Deckbands an bzw. in diesem Konturpunkt P_{K, i} ist, wobei diese Randpunkte P_{R, ij} jeweils in einem Kegel mit der durch einen Randpunkt gehenden Normalen auf die Außenkontur des Profilquerschnitts in dem Konturpunkt P_{K, i} als Kegelachse und mit einem halben Öffnungs- bzw. Kegelwinkel liegen, höchstens 15° beträgt, wobei dies in einer Ausführung für wenigstens 50%, insbesondere wenigstens 75%, in einer Ausführung wenigstens 90%, insbesondere wenigstens 99%, aller Randpunkte P_{R, ij} innerhalb dieses Kegels um diese Normale in dem jeweiligen Konturpunkt P_{K, i} und/oder für wenigstens 50%, insbesondere wenigstens 75%, in einer Ausführung wenigstens 90%, insbesondere wenigstens 99%, aller Konturpunkte P_{K, i} der Außenkontur des Profilquerschnitts gilt und/oder hier genannte Randpunkte (gaskanalseitige Rand)Punkte (eines Randes) einer Gaskanalseite bzw. gaskanalseitigen bzw. -zugewandten Oberfläche des Deckbandes sind.

Hierdurch kann das Gewicht des Deckbands bei vorteilhafter strukturmechanischer, aerodynamischer und/oder thermischer Funktionserfüllung reduziert werden. Dadurch kann wiederum in einer Ausführung das Gewicht der Tragstruktur, insbesondere des Schaufelblattes und/oder -fußes bzw. einer Scheibe, und/oder einer Panzerung bzw. eines sogenannten Containments zum Schutz bei Versagen der Laufschaufel reduziert und damit das Gewicht der (Turbinen- bzw. Verdichterstufe der) Gasturbine bei vorteilhafter strukturmechanischer, aerodynamischer und/oder thermischer Funktionserfüllung (weiter) reduziert werden.

In einer Ausführung beträgt die Wandstärke an dem (jeweiligen) Randpunkt P_{R, ij} (jeweils) höchstens 70% und/oder wenigstens 5% der Wandstärke des Deckbands an dem (jeweiligen) Konturpunkt P_{K, i} (0,05·t(P_{K,i}) ≤ t(P_{R,ij}) ≤ 0,70·t(P_{K, i})), insbesondere also für einen oder mehrere Konturpunkte P_{K, i}, in einer Ausführung für wenigstens 50%, insbesondere wenigstens 75%, in einer Ausführung wenigstens 90%, insbesondere wenigstens 99%, aller Konturpunkte P_{K, i} der Außenkontur des Profilquerschnitts und/oder für einen oder mehrere Randpunkte P_{R, ij}, in einer Ausführung für wenigstens 50%, insbesondere wenigstens 75%, in einer Ausführung wenigstens 90%, insbesondere wenigstens 99%, aller Randpunkte P_{R, ij}, innerhalb des Kegels um die Normale auf die Außenkontur des Profilquerschnitts in dem jeweiligen Konturpunkt P_{K, i} mit dem halben Öffnungs- bzw. Kegelwinkel von höchstens 15°.

Hierdurch kann in einer Ausführung das Gewicht des Deckbands bei vorteilhafter strukturmechanischer, aerodynamischer und/oder thermischer Funktionserfüllung besonders vorteilhaft reduziert werden. Dadurch kann wiederum in einer Ausführung das Gewicht der Tragstruktur, insbesondere des Schaufelblattes und/oder -fußes bzw. einer Scheibe, und/oder einer Panzerung (Containment) zum Schutz bei Versagen der Laufschaufel besonders vorteilhaft reduziert und damit das Gewicht der (Turbinen- bzw. Verdichterstufe der) Gasturbine bei vorteilhafter strukturmechanischer, aerodynamischer und/oder thermischer Funktionserfüllung besonders vorteilhaft (weiter) reduziert werden.

Gemäß der Erfindung nimmt die Wandstärke des Deckbands längs der (jeweiligen) Verbindungsgeraden von dem (jeweiligen) Randpunkt P_{R, ij} zu dem (jeweiligen) Konturpunkt P_{K, i} streng monoton ab, insbesondere also längs der (jeweiligen) Verbindungsgeraden eines oder mehrerer Konturpunkte P_{K, i}, in einer Ausführung für wenigstens 50%, insbesondere wenigstens 75%, in einer Ausführung wenigstens 90%, insbesondere wenigstens 99%, aller Konturpunkte P_{K, i} der Außenkontur des Profilquerschnitts, und/oder eines oder mehrerer Randpunkte P_{R, ij}, in einer Ausführung für wenigstens 50%, insbesondere wenigstens 75%, in einer Ausführung wenigstens 90%, insbesondere wenigstens 99%, aller Randpunkte P_{R, ij}, innerhalb des Kegels um die Normale auf die Außenkontur des Profilquerschnitts in dem jeweiligen Konturpunkt P_{K, i} mit dem halben Öffnungs- bzw. Kegelwinkel von höchstens 15°.

Hierdurch kann in einer Ausführung das Gewicht des Deckbands bei vorteilhafter strukturmechanischer, aerodynamischer und/oder thermischer Funktionserfüllung besonders vorteilhaft reduziert werden. Dadurch kann wiederum in einer Ausführung das Gewicht der Tragstruktur, insbesondere des Schaufelblattes, und/oder einer Panzerung (Containment) zum Schutz bei Versagen der Laufschaufel besonders vorteilhaft reduziert und damit das Gewicht der (Turbinen- bzw. Verdichterstufe der) Gasturbine bei vorteilhafter strukturmechanischer, aerodynamischer und/oder thermischer Funktionserfüllung besonders vorteilhaft (weiter) reduziert werden.

Nach einer Ausführung der vorliegenden Erfindung wird bzw. ist die Laufschaufel, insbesondere ihr Deckband und/oder ihr Schaufelblatt, vollständig oder teilweise mithilfe eines additiven bzw. generativen Fertigungsverfahrens, insbesondere selektiven Laserschmelzens, hergestellt.

Hierdurch kann in einer Ausführung eine erfindungsgemäße Laufschaufel, insbesondere eine erfindungsgemäße Wandstärke des Deckbands, besonders vorteilhaft realisiert werden.

Eine oder beide Stirnseiten des Deckbands weisen in Umfangsrichtung (jeweils) wenigstens einen Nocken mit einem in Umfangsrichtung obersten Nockenpunkt und wenigstens eine Nut mit einem in Umfangsrichtung untersten Nutpunkt auf, insbesondere kann das Deckband somit an sich bekannte sogenannte Z-Notches bzw. eine Z-artige (Stirnwand)Konturierung aufweisen.

Hierdurch können in einer Ausführung die Deckbänder einander in Umfangsrichtung benachbarter Laufschaufeln vorteilhaft aneinander abgestützt werden.

Die Wandstärke ist an, insbesondere in, einem oder mehreren Randpunkten (der Stirnseite) zwischen dem Nocken und der Nut und an, insbesondere in, einem oder mehreren Randpunkten (der Stirnseite) auf einer nutabgewandten Seite des Nockens und an, insbesondere in, einem oder mehreren Randpunkten (der Stirnseite) auf einer nockenabgewandten Seite der Nut (jeweils) kleiner als an bzw. in diesem Nockenpunkt und/oder Nutpunkt. Somit ist die Wandstärke des Deckbands in einer Ausführung an den Z-Notches selber größer als in wenigstens einem diesen, insbesondere axial, benachbarten Bereich des Randes des Deckbands bzw. der jeweiligen Stirnseite.

Hierdurch können vorteilhafte Kontaktflächen einander in Umfangsrichtung benachbarter Laufschaufeln realisiert und/oder ein Biegewiderstand des Deckbands vorteilhaft erhöht werden.

In einer Ausführung weist das Deckband, in einer Weiterbildung auf einer gaskanalabgewandten Seite, eine oder mehrere, in einer Ausführung taschenartige, Vertiefungen auf.

Hierdurch kann in einer Ausführung das Gewicht des Deckbands bei vorteilhafter strukturmechanischer, aerodynamischer und/oder thermischer Funktionserfüllung besonders vorteilhaft reduziert werden. Dadurch kann wiederum in einer Ausführung das Gewicht der Tragstruktur, insbesondere des Schaufelblattes, und/oder einer Panzerung (Containment) zum Schutz bei Versagen der Laufschaufel besonders vorteilhaft reduziert und damit das Gewicht der (Turbinen- bzw. Verdichterstufe der) Gasturbine bei vorteilhafter strukturmechanischer, aerodynamischer und/oder thermischer Funktionserfüllung besonders vorteilhaft (weiter) reduziert werden.

In einer Ausführung sind an einer gaskanalabgewandten Seite des Deckbands eine oder mehrere, in einer Weiterbildung in Umfangsrichtung verlaufende und/oder radiale, Dichtrippen angeordnet. Diese können in einer Ausführung integral mit dem Deckband ausgebildet oder stoffschlüssig mit diesem verbunden sein. Gleichwohl stellen sie in einer Ausführung in Hinblick auf die Wandstärke des Deckbands keinen Teil des Deckbands dar. Mit anderen Worten werden in einer Ausführung solche Dichtrippen bei der Messung bzw. Definition der Wandstärke des Deckbands (virtuell) ausgeblendet bzw. als Wandstärke des Deckbands in einem Bereich einer Dichtrippe die Wandstärke zu einer (virtuellen) gaskanalabgewandten Oberfläche des Deckbands betrachtet, die die beiden deckbandseitigen Kanten der Dichtrippe linear miteinander verbindet.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Laufschaufel nach einer Ausführung der vorliegenden Erfindung in perspektivischer Ansicht;
- Fig. 2: eine Draufsicht auf die Laufschaufel von radial außen; und
- Fig. 3: eine Schnittsicht auf die Laufschaufel von radial innen.

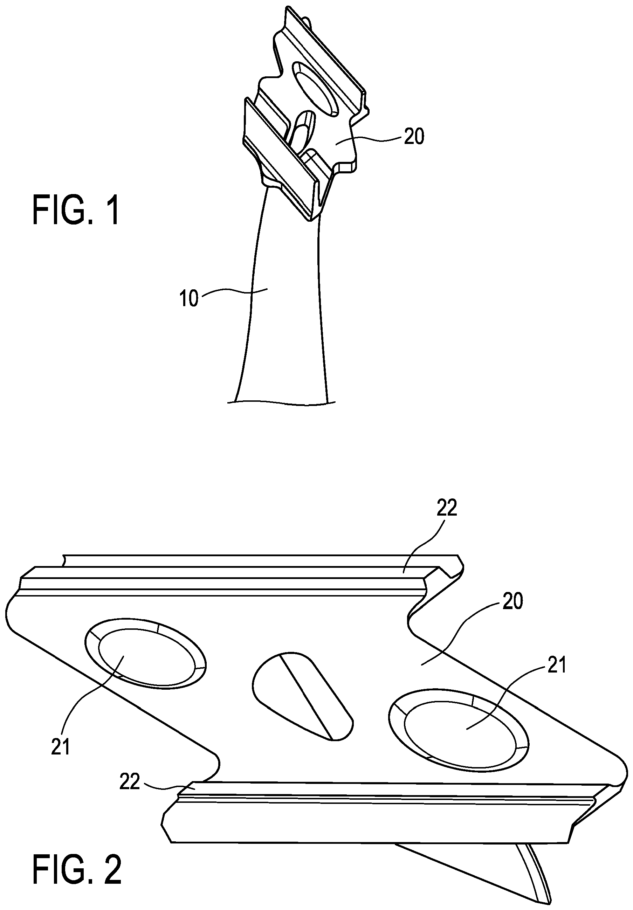

Fig. 1 zeigt einen Teil einer Laufschaufel nach einer Ausführung der vorliegenden Erfindung in perspektivischer Ansicht mit einem Teil eines Schaufelblatts 10 und einem radial äußeren (oben in Fig. 1) Deckband 20, Fig. 2 eine Draufsicht auf die Laufschaufel bzw. deren Deckband 20 von radial außen, in der man taschenartige Vertiefungen 21 sowie zwei Dichtrippen 22 erkennt.

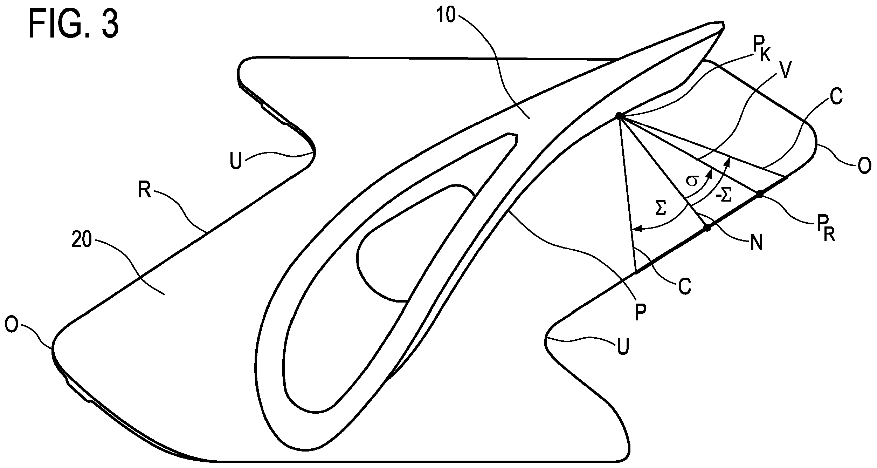

Fig. 3 zeigt eine Schnittsicht auf die Laufschaufel von radial innen, d.h. einen Schnitt durch deren hohles Schaufelblatt 10.

Man erkennt, dass die beiden Stirnseiten des Deckbands in Umfangsrichtung, d.h. die in Fig. 3 linke Stirnseite und die in Fig. 3 rechte Stirnseite, jeweils einen Nocken mit einem in Umfangsrichtung obersten Nockenpunkt O und eine Nut mit einem in Umfangsrichtung untersten Nutpunkt U aufweisen.

Die Wandstärke des Deckbands 20 an den Nocken und Nuten ist jeweils etwas größer als in den diesen axial (vertikal in Fig. 3) benachbarten Bereichen, so dass insbesondere die Wandstärke an wenigstens einem Randpunkt zwischen Nocken und Nut und/oder an wenigstens einem Randpunkt auf einer nutabgewandten Seite des Nockens (links: unten; rechts: oben in Fig. 3) und/oder an wenigstens einem Randpunkt auf einer nockenabgewandten Seite der Nut (links: oben; rechts: unten in Fig. 3) kleiner als an dem jeweiligen Nockenpunkt und Nutpunkt ist.

Exemplarisch ist in Fig. 3 für einen Konturpunkt P_{K} einer Außenkontur eines Profilquerschnitts P des Schaufelblatts 10 an einer radial äußeren Gaskanalbegrenzung des Deckbands die Normale N in dem Konturpunkt P_{K}, die auf der Außenkontur P senkrecht steht und durch einen Randpunkt der gaskanalseitigen Oberfläche des Deckbands 20 geht, auf die man in Fig. 3 draufsieht, eingezeichnet.

Mit C ist ein Normalenkegel um diese Normale N angedeutet, der einen halben Kegel- bzw. Öffnungswinkel Σ von 15° aufweist.

Für wenigstens 50% aller Randpunkte des Deckbands 20 bzw. dessen gaskanalseitiger Oberfläche innerhalb dieses Normalenkegels C, von denen in Fig. 3 exemplarisch ein Randpunkt P_{R} sowie dessen Verbindungsgerade V mit dem Konturpunkt P_{K} eingezeichnet ist, gilt, dass eine Wandstärke des Deckbands 20 längs der jeweiligen Verbindungsgeraden mit dem Konturpunkt P_{K} abnimmt und/oder am Randpunkt selber zwischen 5% und 70% einer Wandstärke des Deckbands 20 am Konturpunkt P_{K} beträgt.

Entsprechend ist der Winkel σ, den die Verbindungsgerade V eines solchen Randpunktes P_{R} mit der Normale N einschließt, jeweils betragsmäßig kleiner oder gleich dem halben Kegel- bzw. Öffnungswinkel Σ von 15°.

Die vorstehend exemplarisch für einen in Fig. 3 eingezeichneten Konturpunkt P_{K} der Außenkontur P erläuterten Wandstärkenverläufe bzw. -hältnisse gelten für wenigstens 50% aller Konturpunkt der Außenkontur P.

Obwohl in der vorhergehenden Beschreibung exemplarische Ausführungen erläutert wurden, sei darauf hingewiesen, dass eine Vielzahl von Abwandlungen möglich ist. Außerdem sei daraufhingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Schaufelblatt
- 20: Deckband
- 21: Vertiefung
- 22: Dichtrippe
- C: Normalenkegel
- N: Normale
- O: (oberster) Nocken(punkt)
- P: Außenkontur eines Profil querschnitts
- P_{K}: Konturpunkt
- P_{R}: Randpunkt
- R: Rand
- U: (unterster) Nut(punkt)
- V: Verbindungsgerade
- Σ: halber Kegelwinkel
- σ: Winkel zwischen Normale N und Verbindungsgerade V

## Patentansprüche

1. Laufschaufel für eine Turbinen- oder Verdichterstufe einer Gasturbine, mit einem Schaufelblatt (10) und einem radial äußeren Deckband (20), wobei für wenigstens einen Konturpunkt (P_{K}) einer Außenkontur eines Profilquerschnitts (P) des Schaufelblatts an einer radial äußeren Gaskanalbegrenzung eine Wandstärke des Deckbands an wenigstens einem Randpunkt (P_{R}) des Deckbands, dessen Verbindungsgerade (V) mit dem Konturpunkt mit einer Normalen (N), die in dem Konturpunkt auf der Außenkontur des Profilquerschnitts senkrecht steht, einen Winkel (σ) einschließt, der höchstens 15° beträgt, kleiner als eine Wandstärke des Deckbands an dem Konturpunkt ist, wobei die Wandstärke des Deckbands längs der Verbindungsgeraden streng monoton abnimmt, wobei wenigstens eine Stirnseite des Deckbands in Umfangsrichtung wenigstens einen Nocken mit einem in Umfangsrichtung obersten Nockenpunkt (O) und wenigstens eine Nut mit einem in Umfangsrichtung untersten Nutpunkt (U) aufweist, **dadurch gekennzeichnet, dass** die Wandstärke an wenigstens einem Randpunkt zwischen Nocken und Nut und an wenigstens einem Randpunkt auf einer nutabgewandten Seite des Nockens und an wenigstens einem Randpunkt auf einer nockenabgewandten Seite der Nut kleiner als an dem Nocken- und/oder Nutpunkt ist.

2. Laufschaufel nach dem vorhergehenden Anspruch, **dadurch gekennzeichnet, dass** die Wandstärke an dem Randpunkt höchstens 70% und/oder wenigstens 5% der Wandstärke des Deckbands an dem Konturpunkt beträgt.

3. Laufschaufel nach einem der vorhergehenden Ansprüche, **dadurch gekennzeichnet, dass** für einen oder mehrere Konturpunkte der Außenkontur des Profilquerschnitts, insbesondere wenigstens 50% und/oder wenigstens 75%, der Konturpunkte der Außenkontur des Profilquerschnitts, jeweils eine Wandstärke des Deckbands an einem oder mehreren Randpunkten des Deckbands, deren Verbindungsgeraden mit diesem Konturpunkt mit der Normalen, die in diesem Konturpunkt auf der Außenkontur des Profilquerschnitts senkrecht steht, jeweils einen Winkel einschließen, der höchstens 15° beträgt, insbesondere wenigstens 50% der Randpunkte, deren Verbindungsgerade mit der Normalen in dem jeweiligen Konturpunkt jeweils einen Winkel einschließen, der höchstens 15° beträgt, kleiner als eine Wandstärke des Deckbands an diesem Konturpunkt ist, insbesondere jeweils höchstens 70% und/oder wenigstens 5% der Wandstärke des Deckbands an diesem Konturpunkt beträgt und/oder jeweils längs der Verbindungsgeraden monoton, insbesondere streng monoton, abnimmt.

4. Laufschaufel nach einem der vorhergehenden Ansprüche, **dadurch gekennzeichnet, dass** sie wenigstens teilweise mithilfe eines additiven Fertigungsverfahrens, insbesondere selektiven Laserschmelzens, hergestellt ist.

5. Laufschaufel nach einem der vorhergehenden Ansprüche, **dadurch gekennzeichnet, dass** das Deckband, insbesondere auf einer gaskanalabgewandten Seite, wenigstens eine Vertiefung (21) aufweist.

6. Laufschaufel nach einem der vorhergehenden Ansprüche, **dadurch gekennzeichnet, dass** an einer gaskanalabgewandten Seite des Deckbands wenigstens eine Dichtrippe (22) angeordnet ist.

7. Turbinen- oder Verdichterstufe für eine Gasturbine mit wenigstens einer Laufschaufel nach einem der vorhergehenden Ansprüche.

8. Gasturbine, insbesondere Flugtriebwerk-Gasturbine, mit wenigstens einer Turbinen- oder Verdichterstufe nach dem vorhergehenden Anspruch.

9. Verfahren zum Herstellen einer Laufschaufel nach einem der vorhergehenden Ansprüche 1-6, **dadurch gekennzeichnet, dass** sie wenigstens teilweise mithilfe eines additiven Fertigungsverfahrens, insbesondere selektiven Laserschmelzens, hergestellt wird.

## Claims

1. Rotor blade for a turbine stage or compressor stage of a gas turbine, comprising an airfoil (10) and a radially outer shroud (20), a wall thickness of the shroud at at least one edge point (PR) of the shroud, the connecting line (V) of which edge point to the contour point includes an angle (σ) of at most 15° together with a normal (N) which is perpendicular to the outer contour of the profile cross section at the contour point, being smaller than a wall thickness of the shroud at the contour point for at least one contour point (PK) of an outer contour of a profile cross section (P) of the airfoil at a radially outer gas channel boundary, the wall thickness of the shroud decreasing strictly monotonically along the connecting line, at least one end face of the shroud in the circumferential direction having at least one cam having an uppermost cam point (O) in the circumferential direction and at least one groove having a lowermost groove point (U) in the circumferential direction, **characterized in that** the wall thickness at at least one edge point between the cam and the groove and at at least one edge point on a side of the cam facing away from the groove and at at least one edge point on a side of the groove facing away from the cam is smaller than at the cam point and/or groove point.

2. Rotor blade according to the preceding claim, **characterized in that** the wall thickness at the edge point is at most 70% and/or at least 5% of the wall thickness of the shroud at the contour point.

3. Rotor blade according to any of the preceding claims, **characterized in that**, for one or more contour points of the outer contour of the profile cross section, in particular at least 50% and/or at least 75% of the contour points of the outer contour of the profile cross section, a wall thickness of the shroud at one or more edge points of the shroud, the connecting lines of which edge points to this contour point each include an angle of at most 15° together with the normal, which is perpendicularto the outer contourof the profile cross section at this contour point, in particular at at least 50% of the edge points, the connecting lines of which edge points each include an angle of at most 15° together with the normal at the relevant contour point, is in each case smaller than a wall thickness of the shroud at this contour point, in particular is at most 70% and/or at least 5% of the wall thickness of the shroud at this contour point in each case, and/or decreases monotonically, in particular strictly monotonically, along the connecting line.

4. Rotor blade according to any of the preceding claims, **characterized in that** it is produced at least in part by means of an additive manufacturing method, in particular selective laser melting.

5. Rotor blade according to any of the preceding claims, **characterized in that** the shroud has at least one recess (21), in particularon a side facing away from the gas channel.

6. Rotor blade according to any of the preceding claims, **characterized in that** at least one sealing rib (22) is arranged on a side of the shroud facing away from the gas channel.

7. Turbine stage or compressor stage for a gas turbine, comprising at least one rotor blade according to any of the preceding claims.

8. Gas turbine, in particular an aircraft engine gas turbine, comprising at least one turbine or compressor stage according to the preceding claim.

9. Method for producing a rotor blade according to any of the preceding claims 1-6, **characterized in that** said rotor blade is produced at least in part by means of an additive manufacturing method, in particular selective laser melting.

## Revendications

1. Aube mobile pour un étage de turbine ou de compresseur d'une turbine à gaz, comportant une pale d'aube (10) et un carénage radialementextérieur (20), pourau moins un point de contour (P_{K}) d'un contourextérieur d'une section transversale de profil (P) de la pale d'aube, au niveau d'une limite de conduit de gaz radialement extérieure, une épaisseur de paroi du carénage étant plus petite qu'une épaisseurde paroi du carénage au point de contour, à au moins un point de bord (P_{R}) du carénage dont la droite de liaison (V) du point de contour forme, avec une normale (N) perpendiculaire sur le contourextérieur de la section transversale de profil au point de contour, un angle (σ) d'au plus 15°, l'épaisseur de paroi du carénage diminuant de manière strictement monotone le long de la droite de liaison, au moins un côté frontal du carénage présentant, dans la direction circonférentielle, au moins une came comportant un point de came (O) le plus haut dans la direction circonférentielle et au moins une rainure comportant un point de rainure (U) le plus bas dans la direction circonférentielle, **caractérisée en ce que** l'épaisseur de paroi est plus petite qu'au point de came et/ou de rainure à au moins un point de bord entre la came et la rainure et à au moins un point de bord sur un côté de la came opposé à la rainure et à au moins un point de bord sur un côté de la rainure opposé à la came.

2. Aube mobile selon la revendication précédente, **caractérisée en ce que** l'épaisseur de paroi au point de bord est au plus de 70 % et/ou au moins de 5 % de l'épaisseur de paroi du carénage au point de contour.

3. Aube mobile selon l'une des revendications précédentes, **caractérisée en ce que**, pour un ou plusieurs points de contour du contour extérieur de la section transversale de profil, en particulier au moins 50 % et/ou au moins 75 % des points de contour du contour extérieur de la section transversale de profil, une épaisseur de paroi respective du carénage à un ou plusieurs points de bord du carénage est inférieure à une épaisseurde paroi du carénage à ce point de contour, en particulier respectivement d'au plus 70 % et/ou d'au moins 5 % de l'épaisseur de paroi du carénage à ce point de contour, les droites de liaison du carénage comportant ce point de contour formant avec la normale, laquelle est perpendiculaire sur le contour extérieur de la section transversale de profil à ce point de contour, respectivement un angle d'au plus 15°, en particulier au moins 50 % des points de bord dont la droite de liaison forme avec la normale, au point de contour respectif, respectivement un angle d'au plus 15°, et/ou ladite épaisseur de paroi diminue respectivement de manière monotone le long des droites de liaison, en particulier de manière strictement monotone.

4. Aube mobile selon l'une des revendications précédentes, **caractérisée en ce qu'**elle est produite au moins partiellement à l'aide d'un procédé de fabrication additive, en particulier par fusion sélective par laser.

5. Aube mobile selon l'une des revendications précédentes, **caractérisée en ce que** le carénage présente au moins une cavité (21), en particuliersur un côté opposé au conduit de gaz.

6. Aube mobile selon l'une des revendications précédentes, **caractérisée en ce qu'**au moins une nervure d'étanchéité (22) est disposée sur un côté du carénage opposé au conduit de gaz.

7. Étage de turbine ou de compresseur pour une turbine à gaz comportant au moins une aube mobile selon l'une des revendications précédentes.

8. Turbine à gaz, en particulier turbine à gaz de moteur d'aéronef, comportant au moins un étage de turbine ou de compresseur selon la revendication précédente.

9. Procédé de production d'une aube mobile selon l'une des revendications 1 à 6 précédentes, **caractérisé en ce qu'**elle est produite au moins partiellement à l'aide d'un procédé de fabrication additive, en particulier parfusion sélective par laser.
